Europäisches Patentamt

European Patent Office

Office européen des brevets

(19)

(11) Numéro de publication: **0 293 275**
**A1**

(12) ## DEMANDE DE BREVET EUROPEEN

(21) Numéro de dépôt: **88400946.5**

(22) Date de dépôt: **19.04.88**

(51) Int. Cl.⁴: **B 65 G 47/91**

(30) Priorité: **24.04.87 FR 8705845**

(43) Date de publication de la demande:
**30.11.88 Bulletin 88/48**

(84) Etats contractants désignés:
**AT BE CH DE ES GB IT LI NL SE**

(71) Demandeur: **E.P. REMY ET CIE**
**50 Avenue des Fenots**
**F-28104 Dreux Cédex (FR)**

(72) Inventeur: **Lemaire, Didier**
**Rue de la Pinède Les Bochets**
**F-28500 Cherisy (FR)**

**Dronet, Jean-Marc**
**Le Bourg Neuvy au Houlme**
**F-61210 Putanges Pont Ecrepin (FR)**

(74) Mandataire: **Durand, Yves Armand Louis et al**
**CABINET WEINSTEIN 20, Avenue de Friedland**
**F-75008 Paris (FR)**

(54) **Procédé de transfert d'objets d'un convoyeur sur un autre convoyeur et dispositif pour l'exécution de ce procédé.**

(57) La présente invention concerne un procédé et un appareil de transfert d'objets, tels que par exemple des récipients, depuis un premier convoyeur les supportant jusqu'à un deuxième convoyeur disposé orthogonalement au premier et destiné par exemple à évacuer les objets.

Cet appareil comprend essentiellement une tête preneuse (T) constituée par une tige verticale (3) montée rotative et axialement déplaçable dans une couronne (4) formant came, cette tige comportant à ses deux extrémités un bras (5, 7) perpendiculaire à la tige (3), l'un (5) de ces bras portant une ventouse (6), et l'autre bras (7) comportant à son extrémité libre un galet (8) roulant sur la partie supérieure (9a) de la came (9) qui comporte une encoche (10), de façon à faire subir à cette tige un mouvement combiné de translation verticale et de rotation suivant une trajectoire tangentielle à la direction longitudinale du deuxième convoyeur (C₂).

Le dispositif de l'invention s'applique au transfert de récipients (R) de forme quelconque et contenant par exemple une denrée alimentaire.

EP 0 293 275 A1

## Description

### Procédé de transfert d'objets d'un convoyeur sur autre convoyeur et dispositif pour l'exécution de ce procédé.

La présente invention a essentiellement pour objet un prodédé de transfert d'objets, tels que par exemple des récipients, d'un convoyeur à un autre.

Elle vise également un dispositif pour l'exécution de ce procédé.

On connaît déjà des systèmes de transfert de récipients depuis un premier convoyeur les supportant jusqu'à un deuxième convoyeur disposé orthogonalement au premier convoyeur et destiné par exemple à évacuer les récipients conditionnés lors de leur transport par le premier convoyeur.

Toutefois, ces systèmes étaient généralement compliqués et n'étaient pas d'un fonctionnement fiable. En effet, on comprend qu'il est particulièrement délicat de transférer sans incident des objets portés par un premier convoyeur vers un deuxième convoyeur en marche, ce transfert devant être réalisé sans provoquer la chute ni la détérioration des récipients.

La présente invention a pour but de résoudre ce problème en proposant un procédé et un dispositif de transfert de récipients qui ne risquent aucunement d'être détériorés ou de se renverser lors du transfert.

A cet effet, l'invention a pour objet un procédé de transfert d'objets, tels que par exemple des récipients, depuis un premier convoyeur les supportant jusqu'à un deuxième convoyeur disposé orthogonalement au premier convoyeur et destiné par exemple à évacuer les objets, caractérisé en ce qu'il consiste à saisir et extraire les objets du premier convoyeur et à les amener sur le deuxième convoyeur en leur faisant subir un mouvement de rotation suivant une trajectoire sensiblement tangentielle à la direction longitudinale du deuxième convoyeur et à une vitesse sensiblement égale à celle du deuxième convoyeur où ils sont déposés.

Ce procédé est encore caractérisé par le fait que les objets sont saisis par aspiration puis amenés vers et déposés sur le deuxième convoyeur par un mouvement combiné de translation dans le plan horizontal et vertical.

L'invention vise également un dispositif pour l'exécution du procédé répondant aux caractéristiques ci-dessus, et comprenant une tête preneuse susceptible de saisir les objets ou récipients transportés par un premier convoyeur pour les amener sur un deuxième convoyeur disposé orthogonalement au premier, caractérisé en ce que ladite tête preneuse est constituée par une tige ou analogue verticale montée rotative et axialement déplaçable dans une couronne formant came, et par deux bras respectivement solidaires des extrémités de la tige et dont l'un porte une ventouse, tandis que l'autre bras coopère avec ladite couronne.

On précisera encore ici que la couronne formant came comporte une partie supérieure sensiblement plane et interrompue par une encoche sensiblement en forme de V pratiquée dans la paroi de la couronne.

Selon encore une autre caractéristique de ce dispositif, l'un des bras précités porte à son extrémité libre un galet roulant sur la partie supérieure de la couronne, tandis que l'autre bras porte à son extrémité libre une ventouse susceptible de venir au droit d'un poussoir prévu sous le brin supérieur du premier convoyeur.

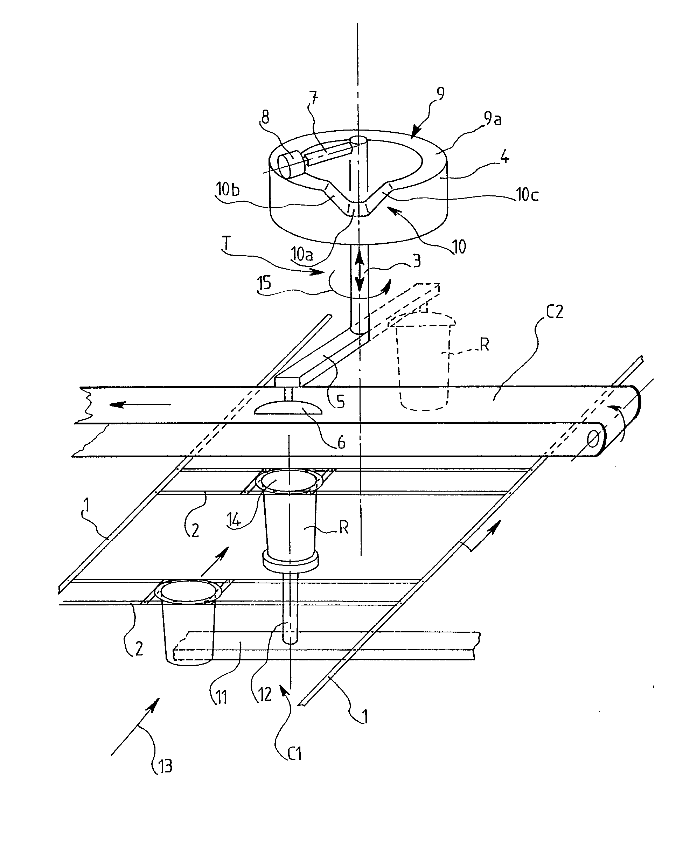

Mais d'autres caractéristiques et avantages de l'invention apparaîtront mieux dans la description détaillée qui suit et se réfère au dessin unique annexé représentant schématiquement et en perspective un dispositif conforme aux principes de l'invention.

En se reportant au dessin, on voit un convoyeur $C_1$ à deux chaînes ou analogues sans fin 1 entre lesquelles sont fixés des supports 2 susceptibles de recevoir et retenir des récipients R, tels que par exemple des gobelets contenant une denrée alimentaire, ce convoyeur $C_1$ étant disposé orthogonalement à et par exemple légèrement en-dessous d'un deuxième convoyeur $C_2$.

La partie du convoyeur $C_1$ représentée sur la figure peut par exemple constituer la partie d'extrémité d'un convoyeur permettant le conditionnement des récipients R qui sont remplis d'un produit quelconque et qui doivent être transférés sur le convoyeur $C_2$ qui est par exemple un convoyeur d'évacuation de ces récipients.

Conformément à l'invention, on prévoit au-dessus du convoyeur $C_2$ et sensiblement à l'intersection des convoyeurs $C_1$ et $C_2$ une tête preneuse T constituée par une tige ou analogue 3 verticale et qui est montée rotative et axialement déplaçable dans une couronne 4 formant came.

La tige 3 peut être entraînée en rotation par tout moyen approprié quelconque non représenté, et cela en lui laissant la liberté de se translater verticalement dans la couronne 4, c'est-à-dire suivant l'axe de ladite couronne.

La tige 3 comporte à son extrémité inférieure un bras 5 sensiblement perpendiculaire à ladite tige et à l'extrémité libre duquel est suspendue une ventouse 6.

L'extrémite supérieure de la tige 3 est munie elle aussi d'un bras 7 sensiblement perpendiculaire à la tige 3 et muni à son extrémité libre d'un galet ou analogue 8 roulant sur la partie ou face supérieure 9 de la couronne 4.

Comme on le voit bien sur le dessin, dans la paroi de la couronne 4 est pratiquée une encoche 10 sensiblement en forme de V et comprenant un fond 10a de chaque côté duquel s'étendent deux parties en pente 10b et 10c.

On a montré en 11 une barre située sous le brin supérieur du convoyeur $C_1$ et portant des poussoirs 12 susceptibles de pousser vers le haut, comme cela est bien connu, les récipients R, de façon à les faire sortir des supports 2, ce après quoi lesdits récipients seront saisis et transférés sur le convoyeur $C_2$ à l'aide de l'appareil selon cette invention.

On observera ici que les supports 2 du convoyeur

$C_1$ peuvent être d'un type quelconque et aptes à supporter un nombre quelconque de récipients, étant entendu qu'on devra prévoir autant de dispositifs conformes à l'invention qu'il y a de récipients à saisir et supportés par chaque plaque 2 du convoyeur $C_1$.

Mais, dans un but de meilleure compréhension, on expliquera ci-après le fonctionnement du dispositif qui vient d'être décrit.

On partira de la position dans laquelle le bras 7 de la tige 3 se trouve au fond 10a de l'encoche 10, la ventouse 6 étant par conséquent dans sa position la plus basse.

Les récipients R transportés par le convoyeur $C_1$ suivant la flèche 13 parviennent au droit de la ventouse 6.

A ce stade, la barre 11 portant les poussoirs 12 monte et pousse le récipient R contre la ventouse 6 qui s'applique sur l'opercule ou couvercle 14 du récipient et saisit par conséquent par aspiration ledit récipient.

La tige 3 tourne alors dans le sens inverse de celui des aiguilles d'une montre comme matérialisé par la flèche 15, de sorte que le galet 8 porté par le bras 7 roule sur la partie en pente 10c de l'encoche 10. Dès lors, le récipient R saisi par la ventouse 6 va effectuer un mouvement simultané de remontée et de début de rotation, étant entendu que le récipient R se trouve, avant ce mouvement, dégagé du support 2 grâce au poussoir 12.

Le galet 18 parvient alors sur la partie supérieure et plane 9a de la couronne 4, de sorte que le récipient R va effectuer une rotation dans un plan sensiblement horizontal jusqu'à se trouver au droit du convoyeur $C_2$, comme montré en traits mixtes sur le dessin.

A ce moment là, on casse le vide dans la ventouse 6, de sorte que le récipient R sera déposé sur le convoyeur $C_2$, mais il est important de remarquer ici que la libération du récipient R s'effectuera alors que la tige 3 tourne sensiblement à la même vitesse que la vitesse d'entraînement du convoyeur $C_2$. Egalement, on notera que le mouvement de rotation de la ventouse 6 s'effectue suivant une trajectoire sensiblement tangentielle à la direction longitudinale du convoyeur $C_2$.

Il résulte de ce qui précède que la libération des récipients R sur le convoyeur $C_2$ s'effectuera sans aucun risque de détérioration ou de chute de ces récipients.

Une fois que le récipient R est déposé sur le convoyeur $C_2$, la tige 3 continue à tourner suivant le sens de la flèche 15 jusqu'à ce que le galet 8 descende sur la partie en pente 10b et revienne en fond 10a de l'encoche 10, de façon que la ventouse 6 soit prête pour saisir un nouveau récipient R et le transférer sur le convoyeur $C_2$ suivant la séquence de mouvements expliquée précédemment.

On a donc réalisé suivant l'invention un dispositif de transfert de récipients qui permet d'une façon simple et fiable de faire passer un récipient d'un premier convoyeur à un deuxième convoyeur orthogonal au premier et entraîné d'une manière continue.

Bien entendu, l'invention n'est nullement limitée au mode de réalisation décrit et illustré qui n'a été donné qu'à titre d'exemple.

C'est ainsi que les convoyeurs $C_1$ et $C_2$ ont été décrits comme se situant respectivement dans deux plans décalés en hauteur, mais ces deux convoyeurs pourraient parfaitement être situés dans le même plan et disposés perpendiculairement l'un à l'autre, sans pour cela sortir du cadre de l'invention.

Egalement, les moyens utilisés pour entraîner la tige 3 et pour fixer la couronne 4 peuvent être réalisés d'une manière appropriée quelconque.

C'est dire que l'invention comprend tous les équivalents techniques des moyens décrits ainsi que leurs combinaisons si celles-ci sont effectuées suivant l'esprit de l'invention.

## Revendications

1. Dispositif de transfert d'objets, tels que par exemple des récipients (R), depuis un premier convoyeur ($C_1$) les supportant jusqu'à un deuxième convoyeur ($C_2$) disposé sensiblement orthogonalement au premier convoyeur ($C_1$), au moyen d'une tête preneuse (T) constituée par une tige ou analogue (3) verticale montée rotative et axialement déplaçable par coopération avec des moyens formant came, caractérisé en ce que lesdits moyens formant came sont constitués par une couronne (4) dans laquelle peut tourner et se translater librement verticalement ladite tige (3) qui comporte à son extrémité supérieure un bras (7) sensiblement perpendiculaire à la tige (3) et coopérant avec la face supérieure (9) de la couronne (4) dans laquelle est pratiquée une encoche en forme de V (10), et à son extrémité inférieure un bras (5) sensiblement perpendiculaire à ladite tige et à l'extrémité libre duquel est suspendue une ventouse (6).

2. Dispositif selon la revendication 1, caractérisé en ce que le bras précité (7) porte à son extrémité libre un galet (8) roulant sur la face supérieure (9) de la couronne (4), tandis que la ventouse (6) à l'extrémité libre de l'autre bras (5) est susceptible de venir au droit d'un poussoir (12) prévu sous le brin supérieur du premier convoyeur ($C_1$).

**Office européen des brevets**

# RAPPORT DE RECHERCHE EUROPEENNE

Numero de la demande

EP 88 40 0946

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 362 727 (ACMA S.p.A.)<br>* Revendications 1,2,6; figure *<br>--- | 1,2 | B 65 G 47/91 |
| A | FR-A-1 554 549 (MIF INDUSTRIES, INC.)<br>* Résumé; figures 2-4 *<br>--- | 1,2 | |
| A | FR-A-2 516 901 (G.D. SOCIETA PER AZIONI)<br>* Revendications 1,2; figures *<br>--- | | |
| A | FR-A-2 446 786 (BECKER & VAN HULLEN)<br>* Page 3, lignes 1-26; figure *<br>--- | 1,2 | |
| A | US-A-1 440 769 (J.L. COTE)<br>----- | | |

DOMAINES TECHNIQUES RECHERCHES (Int. Cl.4)

B 65 G
B 23 G
F 16 H

Le présent rapport a été établi pour toutes les revendications

| Lieu de la recherche | Date d'achèvement de la recherche | Examinateur |
|---|---|---|
| LA HAYE | 20-07-1988 | VAN ROLLEGHEM F.M. |